# EUROPÄISCHE PATENTSCHRIFT

(11) **EP 1 350 700 B1**
(45) Veröffentlichungstag und Bekanntmachung des Hinweises auf die Patenterteilung: **07.06.2006**
(21) Anmeldenummer: 02023347.4
(22) Anmeldetag: 18.10.2002
(51) Int. Cl.: B60S 1/18, B60S 1/24, B60S 1/34

(54) **Antrieb eines Scheibenwischers**
Windscreen wiper drive
Dispositif d'entraînement pour essuie-glace

(30) Priorität: 27.03.2002 DE 10213690
(43) Veröffentlichungstag der Anmeldung: 08.10.2003
(73) Patentinhaber: ROBERT BOSCH GMBH, 70442 Stuttgart (DE)
(72) Erfinder: Neubauer, Achim, 76547 Sinzheim-Vormberg (DE); Bolz, Martin-Peter, 77815 Buehl (DE); Moench, Jochen, 76547 Sinzheim (DE)

(56) Entgegenhaltungen:
- WO-A-02/18187
- DE-A- 3 641 510
- DE-A- 19 824 640

## Beschreibung

### Stand der Technik

Die Erfindung geht von einem Antrieb eines Scheibenwischers nach dem Oberbegriff des Anspruchs 1 aus.

Wischeranlagen mit mehreren Scheibenwischern für Kraftfahrzeuge werden mit deren Wischerlagern direkt oder indirekt über eine Platine an der Fahrzeugkarosserie befestigt. In der Regel umfasst die Platine eine Motorplatine, die einen Wischerantrieb mit einem Wischermotor trägt. Eine Abtriebswelle des Wischermotors treibt über ein Hebelgetriebe eine Wischerwelle für jeden Scheibenwischer an. Diese ist schwenkbar in einem Lagergehäuse des Wischerlagers gelagert. Um Bauraum einzusparen, werden die Scheibenwischer zunehmend von einem reversierbaren Wischermotor angetrieben, wobei ein Wischermotor mehrere Scheibenwischer gemeinsam antreibt oder jedem Scheibenwischer ein Wischermotor zugeordnet sein kann. Die letzte Alternative ist besonders für Gegenlaufwischanlagen geeignet, bei denen die Wischerlager möglichst nahe an der seitlichen Begrenzung des Fahrzeugs angeordnet werden. Der Wischbereich eines Scheibenwischers wird durch zwei Umkehrpositionen begrenzt, wobei die untere Umkehrposition mit einer Parkposition zusammenfallen kann oder geringfügig oberhalb der Parkposition liegt. In der Parkposition befindet sich der Scheibenwischer während der Betriebspausen in der tiefsten Stellung zur Motorhaube, meistens in einer so genannten Haubenspalte zwischen einer Motorhaube und einer Windschutzscheibe. Während eines Wischvorgangs bewegt sich der Scheibenwischer von der unteren Umkehrposition aus nach oben in die obere Umkehrposition und anschließend wieder zurück. Dabei wird die Bewegung des Scheibenwischers in Schwenkrichtung zur oberen Umkehrposition beispielsweise durch den anströmenden Fahrtwind unterstützt, aber wiederum durch eine größere Gewichtskraft erschwert, während der Scheibenwischer in umgekehrter Schwenkrichtung gegen den Fahrtwind bewegt werden muss, die Gewichtskraft aber in Schwenkrichtung gerichtet ist. Somit wirken auf den Scheibenwischer je nach Schwenkrichtung unterschiedliche Widerstände, die unterschiedliche Antriebsmomente des Wischermotors erfordern, wobei dieser nach dem größten zu erwartenden Moment ausgelegt werden muss und demnach in einigen Betriebszuständen überdimensioniert ist.

Aus der DE 198 24 640 A1 ist ein Wischerantrieb bekannt, der zum Ausgleichen der Antriebsmomente des Wischermotors ein passives Vorspannelement aufweist. Der Wischerantrieb ist hauptsächlich für einen Scheibenwischer mit einem Viergelenkhebelgetriebe vorgesehen. Da derartige Scheibenwischer in der Regel ein großes Gewicht besitzen, entsteht das größte Antriebsmoment in diesem Fall zu Beginn der Aufwärtsbewegung. Nach dieser Schrift ist das Vorspannelement eine Speicherfeder, die mit einem Ende mit einem Hebel des Viergelenkhebelgetriebes verbunden ist, während das andere Ende beispielsweise an der Platine befestigt ist. Die Speicherfeder, in Form einer Zugfeder, ist in der unteren Umkehrposition gespannt, sodass sie die Aufwärtsbewegung besonders zu Beginn unterstützt. Während der Wischbewegung wird die Zugfeder entlastet und kurz vor der oberen Umkehrposition wieder gespannt, sodass sie das Abbremsen und die Umkehrbewegung des Scheibenwischers an dieser Umkehrposition unterstützt und während der Abwärtsbewegung der Gewichtskraft entgegen wirkt. Die Zugfeder besitzt in der Parkposition eine relativ große Vorspannkraft und übt ein Drehmoment auf den Wischerantrieb aus, das sich in den Betriebspausen über die Selbsthemmung des Motorgetriebes, z.B. eines Schneckengetriebes abstützt. Bei neuartigen Wischerantrieben werden vermehrt Planetengetriebe eingesetzt, die einen guten Wirkungsgrad besitzen, aber in der Regel keine Selbsthemmung aufweisen. Für solche Antriebe ist die Speicherfeder nicht geeignet, da sie den Scheibenwischer aus seiner Parkstellung in Richtung auf die obere Umkehrposition verstellt.

### Vorteile der Erfindung

Nach der Erfindung ist die Speicherfeder so angeordnet, dass sie in der Parkposition eines Wischblatts kein bzw. kein nennenswertes Drehmoment auf ein Antriebselement eines Wischerantriebs ausübt, sodas der Wischerantrieb in dieser Position, die der Scheibenwischer in den Betriebspausen einnimmt, keine Haltekraft aufbringen muss und die Speicherfeder daher für Anwendungen mit allen Motorgetrieben geeignet ist.

Die Speicherfeder ist zweckmäßigerweise in einem Federgehäuse eines Lagergehäuses untergebracht und stützt sich mit einem Ende dort ab, während das andere Ende an einem Mitnehmer einer Wischerwelle befestigt ist. In der Parkposition ist die Speicherfeder auf Druck vorgespannt. Da die resultierende Kraft ungefähr durch die Schwenkachse der Wischerwelle verläuft, übt sie kein bzw. kein nennenswertes Drehmoment auf die Wischerwelle aus. Wenn die resultierende Kraft in der Parkposition einen geringen Abstand zur Schwenkachse aufweist, ergibt sich ein kleines dem Anfahrmoment des Wischermotors entgegen wirkendes Drehmoment, das den Scheibenwischer in den Betriebspausen entgegen möglichen Störkräften sicher in der Parkposition hält.

Erst wenn der Wischerantrieb aktiviert und die Wischerwelle leicht gedreht wird, verlagert sich die resultierende Kraft auf die andere Seite der Schwenkachse und erzeugt somit ein Drehmoment, das die Schwenkbewegung der Wischerwelle unterstützt und das zu leistende Anfahrmoment des Wischermotors reduziert. In einer Zwischenstellung zwischen der unteren und oberen Umkehrposition des Scheibenwischers ist die Speicherfeder entspannt und beeinflusst den im Standardbetriebszustand befindlichen Wischermotor nicht. Indem die Wischerwelle weiter bewegt wird, wird die Speicherfeder in Zugrichtung vorgespannt und bremst die Trägheitskräfte des Scheibenwischers bis zum Stillstand in einer oberen Umkehrposition ab. Bei Richtungsumkehr unterstützt die Federvorspannung den Wischermotor wieder, sodass die Verweildauer in der Umkehrposition verkürzt ist und das zum Beschleunigen des Scheibenwischers erforderliche Antriebsmoment des Wischermotors verringert wird. Erreicht die Wischerwelle wieder die untere Umkehrposition, ist die Speicherfeder auf Druck vorgespannt, der Scheibenwischer wird abgebremst und das Anfahren des Wischermotors bei erneuter Richtungsumkehr wird unterstützt. Die untere Umkehrposition kann mit der Parkposition übereinstimmen. Häufig liegt diese etwas unterhalb der unteren Umkehrposition und wird nur angefahren, wenn die Wischeranlage ausgeschaltet wird.

Die Speicherfeder speichert die Energie aus der Massenträgheit der Scheibenwischer vor den Umkehrpositionen und setzt sie nach den Umkehrpositonen wieder frei, sodass das zum Beschleunigen anfänglich sehr hohe Drehmoment deutlich reduziert wird und insgesamt der Momentverlauf über den Schwenkwinkel vorteilhafterweise flacher und symmetrisch wird. Aufgrund der gleichmäßigen Drehmomentbelastung kann der Wischermotor kleiner dimensioniert werden und verbraucht weniger Strom. Überdies kann der Wischermotor präziser geregelt werden, da in den Umkehrpositionen gegen eine definierte Kraft angefahren wird. Gegebenenfalls ist sogar eine vereinfachte Steuerung bzw. Elektronik denkbar.

Die Speicherfeder kann auch an einem anderen Antriebselement, beispielsweise einer Motorkurbel oder einer Antriebskurbel angeordnet sein. In diesem Fall übt die vorgespannte Feder eine nach dem vorher beschriebenen Prinzip unterstützende Kraft auf dieses Antriebselement aus.

Bei einer Ausgestaltung der Erfindung sind die Abtriebswelle des Wischermotors über eine Motorkurbel und ein Drehschubgelenk mit einer Antriebskurbel an der Wischerwelle triebmäßig verbunden, wobei die Speicherfeder an dem Ende der Motorkurbel angreift, das zum Drehschubgelenk weist, und in der Parkposition ungefähr in Längsrichtung der Motorkurbel wirkt, während sie in der oberen Umkehrposition des Wischblatts etwa tangential zum Bewegungskreis des Endes der Motorkurbel verläuft. Ein solcher Antrieb baut sehr kompakt, wobei jedem Scheibenwischer ein Wischermotor zugeordnet wird. Der Wischermotor, in dessen Gehäuse zweckmäßigerweise die Wischerwelle etwa parallel zur Abtriebswelle des Wischermotors gelagert ist, stellt eine kompakte Baueinheit dar, die freizügig in dem knapp bemessenen Bauraum hinter einer Spritzwand eines Kraftfahrzeugs platziert werden kann. Er eignet sich besonders für Gegenlaufwischeranlagen, bei denen die Wischerwelle nahe der seitlichen Begrenzung des Fahrzeugs angeordnet ist. Bei solchen Wischermotoren kommen neben Schneckengetrieben Zahnradgetriebe in Planetenbauweise zum Einsatz, die in der Regel zwar einen hohen Wirkungsgrad, aber keine Selbsthemmung besitzen. Für derartige Antriebe ist es besonders wichtig, dass die Speicherfeder in der Parkposition des Wischblatts kein Drehmoment auf das Antriebselement ausübt. Da sich bei der vorliegenden Ausführung in der Parkposition die resultierende Kraft der Speicherfeder in Richtung der Motorkurbel an der Abtriebswelle abstützt, erzeugt sie keine Kraftkomponente in Umfangsrichtung und damit kein Drehmoment am Antrieb. Erst wenn die Motorkurbel aus der Parkposition heraus bewegt wird, erzeugt die Speicherfeder eine Kraftkomponente in Umfangsrichtung, durch die das Drehmoment des Wischermotors unterstützt wird. In einer Zwischenstellung ist die Speicherfeder entspannt und wird auf dem Rest der Schwenkbewegung der Motorkurbel auf Zug vorgespannt, wodurch die Massenträgheitskräfte des Scheibenwischers zur oberen Totpunktlage hin abgebaut werden, und nach der oberen Totpunktlage die Beschleunigung der Scheibenwischer unterstützt wird. Bei der Bewegung der Motorkurbel über den Schwenkwinkel wird die Speicherfeder zweckmäßigerweise auf dem Bewegungskreis des Endes der Motorkurbel geführt.

Bei einer weiteren Ausgestaltung der Erfindung sind anstelle einer Speicherfeder, die in einer Umkehrposition eine Druckvorspannung und in der anderen Umkehrposition eine Zugvorspannung aufweist, zwei Speicherfedern vorgesehen, die nur im Bereich der Umkehrpositionen wirksam werden und auf Druck vorgespannt sind. Sie wirken auf eine Antriebskurbel der Wischerwelle, und zwar an dem Ende, das über das Drehschubgelenk herausragt. Zumindest in der Parkposition verläuft die resultierende Kraft der Speicherfeder etwa parallel zur Motorkurbel, sodass an der Motorkurbel keine Kraftkomponente in Umfangsrichtung erzeugt wird, und damit auf die Abtriebswelle kein Drehmoment wirkt. Die Speicherfeder im Bereich der oberen Umkehrposition kann genauso angeordnet werden. Sie kann aber auch in der oberen Umkehrposition so geneigt zur Motorkurbel verlaufen, dass sie stets wenn auch nur ein kleines Drehmoment an der Abtriebswelle erzeugt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Wischerlagers,
- Fig. 2: einen Schnitt durch ein Wischerlager in einer Parkposition gemäß einer Linie II-II in Fig. 1,
- Fig. 3: einen Schnitt gemäß Fig. 2 in einer Zwischenstellung,
- Fig. 4: einen Schnitt gemäß Fig. 2 in einer oberen Umkehrposition,
- Fig. 5: eine schematische Frontansicht eines Wischerantriebs und
- Fig. 6: eine Variante zu Fig. 5.

### Beschreibung der Ausführungsbeispiele

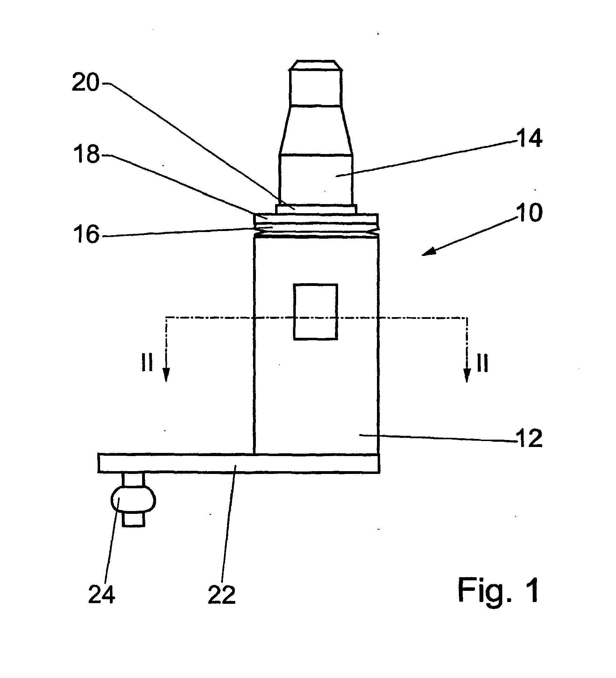

Ein Wischerlager 10 umfasst ein Lagergehäuse 12, in dem eine Wischerwelle 14 schwenkbar gelagert ist (Fig. 1). Diese wird über eine Kurbel 22 mit einem Kugelgelenkzapfen 24 über ein nicht dargestelltes Hebelgetriebe von einem ebenfalls nicht dargestellten reversierbaren Wischermotor angetrieben. In axialer Richtung stützt sich die Wischerwelle 14 über eine Anlaufscheibe 18 und einen Sicherungsring 20 an dem Lagergehäuse 12 ab und wird durch eine Dichtung 16 abgedichtet.

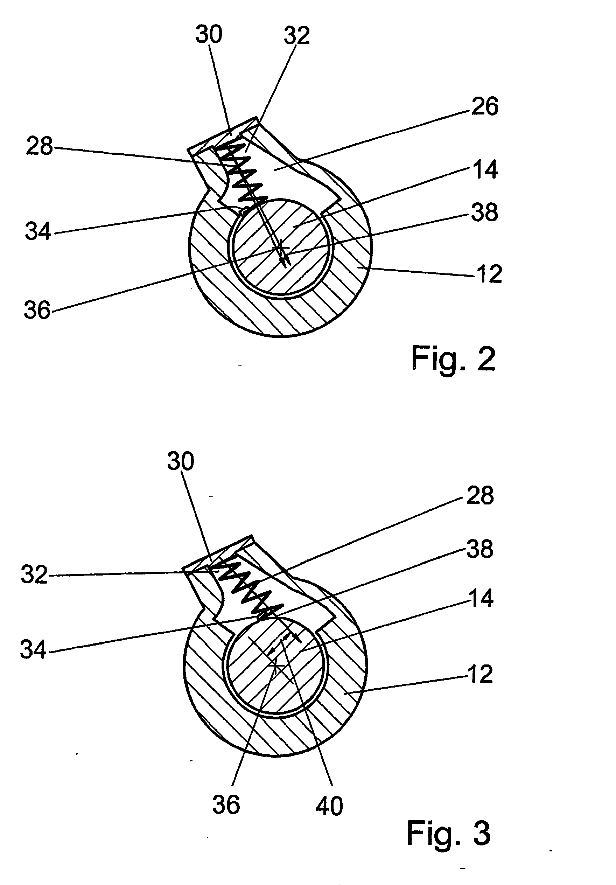

Das Lagergehäuse 12 ist rohrförmig ausgebildet und umgibt die Wischerwelle 14 (Fig. 2). In einem begrenzten Bereich ist das Lagergehäuse 12 verstärkt, so dass genügend Platz für ein Federgehäuse 26 besteht, in dem eine Speicherfeder 28 untergebracht ist. Diese ist mit einem Ende lösbar an einem Mitnehmer 34 befestigt, der an der Wischerwelle 14 beispielsweise durch Punktschweißen befestigt ist, während sie sich mit dem anderen Ende am Federgehäuse 26 abstützt. Im Federgehäuse 26 ist die Speicherfeder 28 an einem Deckel 30 befestigt, der eine Öffnung 32 zum Einfädeln der Speicherfeder 28 schließt. Zur Montage sollte die Wischerwelle 14 die in Fig. 2 dargestellte Position aufweisen, sodass die Speicherfeder 28 leicht am Mitnehmer 34 befestigt, beispielsweise eingeklippst werden kann. Im montierten Zustand ist die Speicherfeder 28 auf Druck vorgespannt, wobei die resultierende Kraft 38 ungefähr durch die Schwenkachse 36 der Wischerwelle 14 verläuft, sodass kein bzw. kein nennenswertes Drehmoment auf die Wischerwelle 14 ausgeübt wird. Diese Stellung entspricht einer Parkposition des Scheibenwischers.

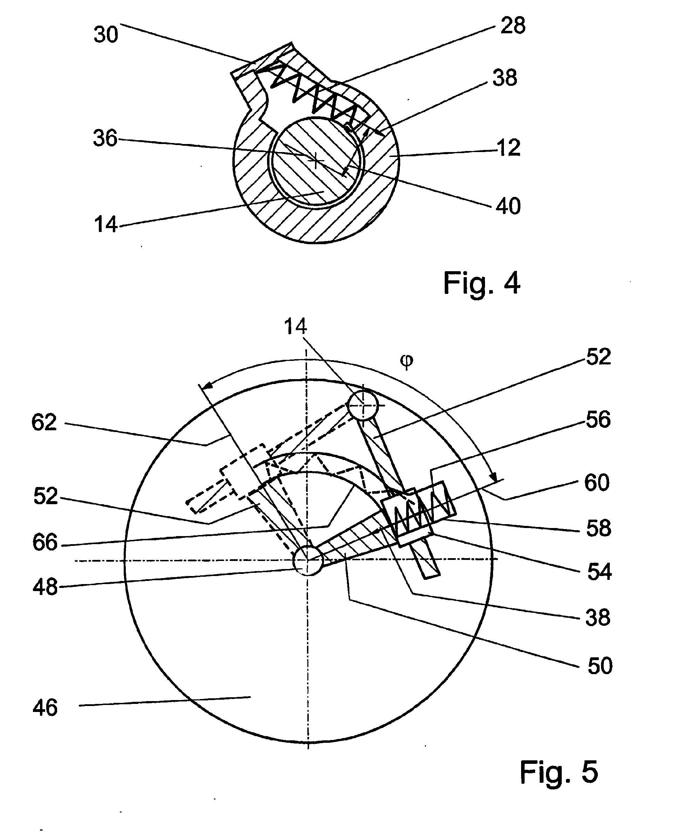

Nach einer geringfügigen Schwenkbewegung der Wischerwelle 14 gelangt die Wischerwelle 14 in die so genannte untere Umkehrposition 60 und die resultierende Kraft 38 der Speicherfeder 28 verläuft zunehmend tangential zur Wischerwelle 14. Sie erzeugt ein Drehmoment, das sich aus der resultierenden Kraft 38 und dem Abstand zwischen dieser und der Schwenkachse 36 ergibt und die Schwenkbewegung der Wischerwelle 14 unterstützt, wodurch das vom Wischermotor aufzubringende Drehmoment reduziert wird. Während der Schwenkbewegung verändern sich die Größe und der Abstand der resultierenden Kraft 38. In einer ersten Phase, in denen die Schwerkraft der Scheibenwischer ein relativ großes Drehmoment auf die Wischerwelle 14 ausübt, steigt der Abstand 40 schnell an, während die Druckvorspannung der Speicherfeder 28, die resultierende Kraft 38 langsam abnimmt. Das unterstützende Drehmoment erreicht daher schnell sein Maximum und fällt danach bis zu einer Mittelstellung auf null ab, in der sich die Speicherfeder entspannt hat (Fig. 3). In einer zweiten Phase von der Mittelstellung bis zur oberen Umkehrposition 62 wird die Speicherfeder 28 auf Zug vorgespannt, wodurch die resultierende Kraft 38 ihre Richtung umkehrt und ihr Abstand 40 zur Schwenkachse 36 langsam bis zu einem Maximum zunimmt, das sie in der oberen Umkehrposition 62 erreicht, in der die Speicherfeder 28 etwa tangential zur Wischerwelle 14 verläuft (Fig. 4). Das durch die Speicherfeder 28 erhöhte Drehmoment in der zweiten Phase kann vom Wischermotor leicht aufgebracht werden, da die Trägheitskräfte des Scheibenwischers bei seiner Richtungsumkehr abgebremst werden müssen, die Schwerkraft ein zunehmend geringeres Drehmoment erzeugt und die Kräfte des Fahrtwinds die Bewegung zur oberen Umkehrposition 62 unterstützen. Die in der Speicherfeder 28 gespeichert Energie kann nach der oberen Umkehrposition 62 zum Beschleunigen des Scheibenwischers gegen die Kräfte des Fahrtwinds genutzt werden. Nach der Mittelposition, in der das unterstützende Moment wieder zu null wird, weil sich die Speicherfeder 28 wieder entspannt, wird die Speicherfeder 28 wieder auf Druck vorgespannt, wobei der Wischermotor durch das zunehmende Drehmoment der Schwerkraft und durch die Trägheitskräfte unterstützt wird.

Die Ausführung nach Fig. 5 besitzt einen Wischermotor mit einer integrierten Wischerwelle 14, der in einer Ansicht auf einen Motordeckel 46 dargestellt ist. Die Wischerwelle 14 wird von einer Abtriebswelle 48 des Wischermotors über eine Motorkurbel 50, ein Drehschubgelenk 54 und eine Antriebskurbel 52 triebmäßig verbunden. Das Drehschubgelenk 54 besteht im Wesentlichen aus einer gelenkig mit der Motorkurbel 50 verbundenen Hülse, die auf der Antriebskurbel 52 in Längsrichtung verschiebbar gelagert ist. Die Motorkurbel 50 wird vom Wischermotor zwischen einem einer Parkposition 64 bzw. einer unteren Umkehrposition 60 und einer oberen Umkehrposition 62 über einen Schwenkwinkelbereich ϕ hin und her bewegt. Die untere Umkehrposition 60 kann mit der Parkposition 64 übereinstimmen oder geringfügig zur oberen Umkehrposition 62 versetzt angeordnet sein.

Entsprechend dem Schwenkwinkel ϕ bewegt sich ein nicht näher dargestellter Scheibenwischer, der mit der Wischerwelle 14 drehfest verbunden ist und auf einer Fahrzeugscheibe über ein entsprechendes Wischfeld gleitet. Das Ende der Motorkurbel 50, an dem das Drehschubgelenk 54 angreift, wird von einer Speicherfeder 56 belastet, die mit einem Ende unmittelbar oder über das Schubgelenk 54 auf die Motorkurbel 50 wirkt und mit dem anderen Ende in einem Federgehäuse 58 befestigt ist. In der unteren Parkposition 60 ist die Speicherfeder 56 auf Druck vorgespannt, wobei die resultierende Kraft 38 in Längsrichtung der Motorkurbel 50 wirkt, sodass keine Kraftkomponente in Umfangsrichtung wirkt und ein Drehmoment an der Abtriebswelle 48 bzw. an der Wischerwelle 14 erzeugt. In der Parkposition 64 schließen die Motorkurbel 50 und die Antriebskurbel 52 einen rechten Winkel ein.

Bei der Bewegung der Motorkurbel 50 auf die obere Umkehrposition 62 zu wirkt die resultierende Kraft 38 nicht mehr in Längsrichtung der Motorkurbel 50, sodas eine Kraftkomponente in Umfangsrichtung erzeugt wird, die das Antriebsmoment des Wischermotors unterstützt. Dabei entspannt sich die Speicherfeder 56 bis zu einer Mittelstellung, von der aus sie bis zur oberen Umkehrposition 62 auf Zug vorgespannt wird. Die Zugkraft der Speicherfeder 56 erzeugt ein dem Motorantriebsmoment entgegen wirkendes Moment, das bis zur oberen Umkehrposition 62 den Scheibenwischer abbremst und danach, wenn der Scheibenwischer zur unteren Umkehrposition 60 zurück-geschwenkt wird, den Scheibenwischer beschleunigt, indem sie das Antriebsmoment des Wischermotors unterstützt. Entsprechend kann die Antriebsleistung des Wischermotors verringert werden. Von der Mittelstellung ab, wenn die Zugvorspannung der Speicherfeder 56 erschöpft ist, wird die Speicherfeder 56 auf Druck vorgespannt, bis sie in der Parkposition 64 ihren Ausgangszustand wieder erreicht. Während der Schwenkbewegung wird die Speicherfeder 56 auf einer Kreisbahn 66 geführt.

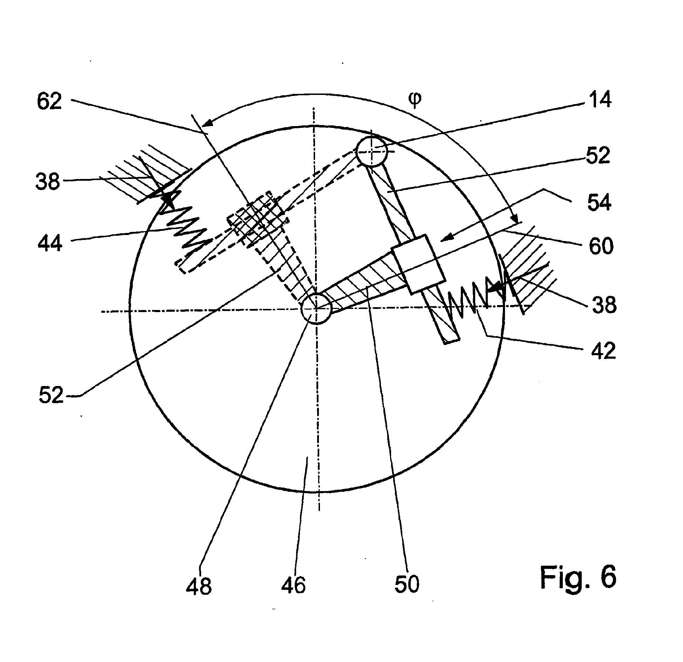

Die Ausführung nach Fig. 6 unterscheidet sich von der Ausführung nach Fig. 5 dadurch, dass anstelle einer Speicherfeder 56 im Bereich der Parkposition 64 jeweils eine Speicherfeder 42, 44 im Bereich der Umkehrpositionen 60 und 62 angeordnet ist. Es sind beides Druckfedern, die nur im Bereich der Umkehrpositionen 60 und 62 jeweils auf das Ende der Antriebskurbel 52 wirken, das über das Drehschubgelenk 54 herausragt. Die Speicherfeder 44 im Bereich der oberen Umkehrposition 62 und insbesondere die Speicherfeder 42 im Bereich der Parkposition 64 sind so angeordnet, dass ihre resultierende Kraft 38 beim Erreichen der Umkehrpositionen 60 bzw. 62 etwa parallel zur Motorkurbel 50 verläuft, sodass kein bzw. kein nennenswertes Drehmoment auf die Abtriebswelle 48 bzw. die Wischerwelle 14 ausgeübt wird. Durch die Anordnung von zwei Speicherfedern 42, 44 ergibt sich ein einfacherer und leichter zu montierender Antrieb.

Die Positionen der Motorkurbel 50 und der Antriebskurbel 52 sind in der oberen Umkehrposition 62 gestrichelt eingezeichnet.

### Bezugszeichen

- 10: Wischerlager
- 12: Lagergehäuse
- 14: Wischerwelle
- 16: Dichtung
- 18: Anlaufscheibe
- 20: Sicherungsring
- 22: Kurbel
- 24: Kugelgelenkzapfen
- 26: Federgehäuse
- 28: Speicherfeder
- 30: Deckel
- 32: Öffnung
- 34: 34 Mitnehmer
- 36: Schwenkachse
- 38: resultierende Kraft
- 40: Abstand
- 42: Speicherfeder
- 44: Speicherfeder
- 46: Motordeckel
- 48: Abtriebswelle

- 50: Motorkurbel
- 52: Antriebskurbel
- 54: Drehschubgelenk
- 56: Speicherfeder
- 58: Federgehäuse
- 60: untere Umkehrposition
- 62: obere Umkehrposition
- 64: Parkposition
- 66: Kreisbahn

- ϕ: Schwenkwinkel

## Patentansprüche

1. Antrieb eines Scheibenwischers mit mindestens einem reversierbaren Wischermotor, dessen Abtriebswelle (48) über ein Hebelgetriebe (50, 52) eine Wischerwelle (14) antreibt, die in einem Lagergehäuse (12) schwenkbar gelagert ist, wobei auf ein Antriebselement (14, 48, 50, 52) mindestens eine Speicherfeder (28, 56) wirkt, die in den Umkehrpositionen (60, 62) vorgespannt ist und in Antriebsrichtung nach den Umkehrpositionen das Antriebsmoment des Wischermotors unterstützt, indem sie sich bis zu einer Mittelstellung entspannt, **dadurch gekennzeichnet, dass** die Speicherfeder (28, 42, 44, 56) so angeordnet ist, dass in einer Parkposition (64) eines Wischblatts die Resultierende der Kraft der Speicherfeder (28, 42, 44, 56) ungefähr durch die Schwenkachse des zugeordneten Antriebselements (14, 48, 50, 52) verläuft, und damit kein Drehmoment auf das Antriebselement (14, 48, 50, 52) ausübt.

2. Antrieb nach Anspruch 1, **dadurch gekennzeichnet, dass** die Speicherfeder (28) in einem Federgehäuse (26) des Lagergehäuses (12) des Wischerlagers (10) untergebracht ist, sich mit einem Ende am Federgehäuse (26) und mit ihrem anderen Ende über einen Mitnehmer (34) an der Wischerwelle (14) abstützt, wobei die Resultierende der Kraft (38) der Speicherfeder (28) in der Parkposition (64) ungefähr durch die Schwenkachse (36) der Wischerwelle (14) verläuft, während sie in einer oberen Umkehrposition (62) des Wischblatts etwa tangential zur Wischerwelle (14) verläuft.

3. Antrieb nach Anspruch 2, **dadurch gekennzeichnet, dass** der Mitnehmer (34) durch Punktschweißen an der Wischerwelle (14) befestigt ist.

4. Antrieb nach Anspruch 1, **dadurch gekennzeichnet, dass** die Abtriebswelle (48) des Wischermotors über eine Motorkurbel (50) und ein Drehschubgelenk (54) mit einer Antriebskurbel (52) an der Wischerwelle (14) triebmäßig verbunden ist, wobei die Speicherfeder (56) an dem Ende der Motorkurbel (50) angreift, das zum Drehschubgelenk (54) weist und die resultierende Kraft (38) der Speicherfeder (56) in der Parkposition (64) ungefähr in Längsrichtung der Motorkurbel (50) wirkt, während sie in der oberen Umkehrposition (62) des Wischblatts etwa tangential zum Bewegungskreis (66) des Endes der Motorkurbel (50) verläuft.

5. Antrieb nach Anspruch 4, **dadurch gekennzeichnet, dass** die Speicherfeder (56) zwischen den Umkehrpositionen (60, 62) auf dem Bewegungskreis (66) geführt ist.

6. Antrieb nach Anspruch 1, **dadurch gekennzeichnet, dass** die Abtriebswelle (48) des Wischermotors über eine Motorkurbel (50) und ein Drehschubgelenk (54) mit einer Antriebskurbel (52) an der Wischerwelle (14) triebmäßig verbunden ist, wobei im Bereich der beiden Umkehrpositionen (60, 62) jeweils eine Speicherfeder (42, 44) in Form einer Druckfeder vorgesehen ist, die an der Antriebskurbel (52) bezogen auf die Wischerwelle (14) außen von dem Drehschubgelenk (54) angreift, wobei zumindest die resultierende Kraft (38) der der unteren Umkehrposition (60) zugeordneten Speicherfeder (42) in der Parkposition (64) annähernd parallel zur Motorkurbel (50) verläuft.

7. Antrieb nach einem der Ansprüche 4 bis 6, **dadurch gekennzeichnet, dass** die Wischerwelle (14) in einem Randbereich eines Motordeckels (46) etwa parallel zur Abtriebswelle (48) in einem Motorgehäuse gelagert ist.

8. Antrieb nach einem der vorhergehenden Ansprüche, **dadurch gekennzeichnet, dass** im Elektromotor ein Zahnradgetriebe in Planetenbauweise integriert ist.

## Claims

1. Windscreen wiper drive with at least one reversible wiper motor, the output shaft (48) of which uses a lever mechanism (50, 52) to drive a wiper shaft (14) which is mounted pivotably in a bearing housing (12), a driving element (14, 48, 50, 52) being acted upon by at least one pre-loaded spring (28, 56) which is pre-loaded in the reversal positions (60, 62) and, in the driving direction after the reversal positions, supports the driving torque of the wiper motor by relaxing as far as a central position, **characterized in that** the pre-loaded spring (28, 42, 44, 56) is arranged in such a manner that, in a parking position (64) of a wiper blade, the net force of the pre-loaded spring (28, 42, 44, 56) runs approximately through the pivot axis of the associated driving element (14, 48, 50, 52) and therefore does not exert any torque on the driving element (14, 48, 50, 52).

2. Drive according to Claim 1, **characterized in that** the pre-loaded spring (28) is accommodated in a spring housing (26) of the bearing housing (12) of the wiper bearing (10) and is supported at one end on the spring housing (26) and at its other end on the wiper shaft (14) via a driver (34), with, in the parking position (64), the net force (38) of the pre-loaded spring (28) running approximately through the pivot axis (36) of the wiper shaft (14) while, in an upper reversal position (62) of the wiper blade, it runs approximately tangentially to the wiper shaft (14).

3. Drive according to Claim 2, **characterized in that** the driver (34) is fastened to the wiper shaft (14) by spot welding.

4. Drive according to Claim 1, **characterized in that** the output shaft (48) of the wiper motor is connected in terms of drive to a driving crank (52) on the wiper shaft (14) via a motor crank (50) and a turning and sliding joint (54), the pre-loaded spring (56) acting on that end of the motor crank (50) which points to the turning and sliding joint (54), and, in the parking position (64), the net force (38) of the pre-loaded spring (56) acting approximately in the longitudinal direction of the motor crank (50) while, in the upper reversal position (62) of the wiper blade, it runs approximately tangentially to the circle of movement (66) of the end of the motor crank (50).

5. Drive according to Claim 4, **characterized in that** the pre-loaded spring (56) is guided between the reversal positions (60, 62) on the circle of movement (66) .

6. Drive according to Claim 1, **characterized in that** the output shaft (48) of the wiper motor is connected in terms of drive to a driving crank (52) on the wiper shaft (14) via a motor crank (50) and a turning and sliding joint (54), with, in the region of the two reversal positions (60, 62), a respective pre-loaded spring (42, 44) in the form of a compression spring being provided, the spring acting on the driving crank (52) with respect to the wiper shaft (14) from the outside of the turning and sliding joint (54), with at least the net force (38) of the pre-loaded spring (42) assigned to the lower reversal position (60) running approximately parallel to the motor crank (50) in the parking position (64).

7. Drive according to one of Claims 4 to 6, **characterized in that** the wiper shaft (14) is mounted approximately parallel to the output shaft (48) in a motor housing in an edge region of a motor cover (46).

8. Drive according to one of the preceding claims, **characterized in that** a toothed gearing is integrated in the electric motor in a planetary construction.

## Revendications

1. Dispositif d'entraînement d'essuie-glace comportant au moins un moteur d'essuie-glace réversible dont l'axe de sortie (48) entraîne un axe d'essuie-glace (14) par l'intermédiaire d'une transmission à levier (50, 52), cet axe d'essuie-glace étant monté de manière pivotante dans un boîtier de palier (12),
un élément d'entraînement (14, 48, 50, 52) étant soumis à l'action d'au moins un ressort accumulateur (28, 56) précontraint dans les positions d'inversion (60, 62) et qui après les positions d'inversion selon la direction d'entraînement renforce le couple d'entraînement du moteur d'essuie-glace en se détendant jusqu'à une position médiane,
**caractérisé en ce que**
les ressorts accumulateurs (28, 42, 44, 56) sont installés pour que dans une position de rangement (64) du balai d'essuie-glace, la résultante de la force des ressorts accumulateurs (28, 42, 44, 56) passe sensiblement par l'axe de pivotement de l'élément d'entraînement associé (14, 48, 50, 52) et n'exerce ainsi aucun couple sur l'élément d'entraînement (14, 48, 50, 52).

2. Dispositif d'entraînement selon la revendication 1,
**caractérisé en ce que**
le ressort accumulateur (28) est logé dans un boîtier de ressort (26) du boîtier (12) du palier d'essuie-glace (10) et s'appuie par une extrémité contre le boîtier de ressort (26) et par l'autre extrémité, par l'intermédiaire d'un organe d'entraînement (34) contre l'axe d'essuie-glace (14),
la résultante de la force (38) du ressort accumulateur (28) en position de rangement (64) passant sensiblement par l'axe de pivotement (36) de l'axe d'essuie-glace (14) alors que dans sa position d'inversion haute (62) du balai d'essuie-glace, cette force est sensiblement tangente à l'axe d'essuie-glace (14).

3. Dispositif d'entraînement selon la revendication 2,
**caractérisé en ce que**
l'organe d'entraînement (34) est fixé à l'axe d'essuie-glace (14) par une soudure par points.

4. Dispositif d'entraînement selon la revendication 1,
**caractérisé en ce que**
l'axe d'entraînement (48) du moteur d'essuie-glace coopère par une manivelle (50) et une articulation de rotation poussée (54) avec une manivelle d'entraînement (52) de l'axe d'essuie-glace (14),
le ressort accumulateur (56) attaquant l'extrémité de la manivelle de moteur (50) dirigée vers l'articulation de rotation et de poussée (54) et la force résultante (38) du ressort accumulateur (56) agit sensiblement dans la direction longitudinale de la manivelle de moteur (50) en position de rangement (64) alors que dans la position d'inversion haute (62) du balai d'essuie-glace cette force est sensiblement tangente au cercle de déplacement (66) de l'extrémité de la manivelle de moteur (50).

5. Dispositif d'entraînement selon la revendication 4,
**caractérisé en ce que**
le ressort accumulateur (56) est guidé entre les positions d'inversion de mouvement (60, 62) sur le cercle de déplacement (66).

6. Dispositif d'entraînement selon la revendication 1,
**caractérisé en ce que**
l'axe de sortie (48) du moteur d'essuie-glace est relié dans le sens de la coopération par une manivelle de moteur (50) et par une articulation à rotation et poussée (54) à une manivelle d'entraînement (52) de l'axe d'essuie-glace (14),
au niveau des deux positions d'inversion (60, 62) un ressort accumulateur (42, 44) en forme de ressort de compression attaque la manivelle d'entraînement (52) de l'extérieur par rapport à l'axe d'essuie-glace (14) par rapport à l'articulation de rotation et de poussée (54),
au moins la résultante (38) du ressort accumulateur (42) associée à la position d'inversion inférieure (60) est sensiblement parallèle à la manivelle de moteur (50) en position de rangement (64).

7. Dispositif d'entraînement selon l'une des revendications 4 à 6,
**caractérisé en ce que**
l'axe d'essuie-glace (14) est installé dans la zone du bord du capot de moteur (46) sensiblement parallèlement à l'axe de sortie (48) dans le boîtier du moteur.

8. Dispositif d'entraînement selon l'une des revendications précédentes,
**caractérisé en ce que**
le moteur électrique comporte une transmission à pignons dentés de structure planétaire.
